# EUROPÄISCHE PATENTSCHRIFT

(11) **EP 2 603 671 B1**
(45) Veröffentlichungstag und Bekanntmachung des Hinweises auf die Patenterteilung: **11.09.2019**
(21) Anmeldenummer: 11740835.1
(22) Anmeldetag: 14.07.2011
(51) Int. Cl.: F01K 23/06, F01B 17/04, F01B 31/10, F01M 5/00, F01M 13/04, F16N 39/04, F02G 5/02

(54) **DAMPFENERGIEANLAGE UND VERFAHREN FÜR DEREN BETRIEB**
STEAM POWER PLANT AND METHOD FOR OPERATING IT
INSTALLATION À VAPEUR ET SON PROCÉDÉ DE FONCTIONNEMENT

(30) Priorität: 11.08.2010 DE 102010034153
(43) Veröffentlichungstag der Anmeldung: 19.06.2013
(73) Patentinhaber: SteamDrive GmbH, 89522 Heidenheim (DE)
(72) Erfinder: BERGER, Jürgen, 89547 Gerstetten (DE); BAUSCH, Christian, 89347 Bubesheim (DE); GRIESER, Jens, 89555 Söhnstetten (DE)
(86) Internationale Anmeldenummer: PCT/EP2011/003509
(87) Internationale Veröffentlichungsnummer: WO 2012/019682

(56) Entgegenhaltungen:
- EP-A1- 1 207 279
- EP-A1- 1 405 987
- DE-C- 849 033
- GB-A- 211 844

## Beschreibung

Die Erfindung betrifft eine Dampfenergieanlage und ein Verfahren für deren Betrieb sowie einen Dampfmotor insbesondere zur Abgaswärmenutzung einer Verbrennungskraftmaschine.

Dampfenergieanlagen, die beispielsweise nach dem Clausius-Rankine-Prozess betrieben werden, wandeln einen Wärmestrom in mechanische Leistung um. Eine Anwendungsmöglichkeit besteht in der Abwärmenutzung von Verbrennungskraftmaschinen von Fahrzeugen, wobei insbesondere die im Abgasstrom enthaltene Wärmeenergie mittels eines Dampfmotors zur Unterstützung des Vortriebs oder zur Speisung sekundärer Antriebe verwendet wird. Typischerweise umfassen derartige Dampfenergieanlagen ein Reservoir mit einem verdampfbaren Arbeitsmedium, aus dem eine mit einem Dampferzeuger verbundene Speisepumpe Arbeitsmedium schöpft. Der mit dem zu nutzenden Wärmestrom beaufschlagte Wärmetauscher verdampft das Arbeitsmedium, das im Dampfmotor unter Verrichtung mechanischer Arbeit entspannt und sodann über einen Kondensator verflüssigt und zum Reservoir zurückgeführt wird.

Beispiele einer solchen Dampfenergieanlage sind in EP 1 405 987 A und GB 211 844 A gezeigt.

Dampfmotoren für Dampfenergieanlagen können beispielsweise als Kolbenmaschinen, insbesondere als Hubkolbenmaschinen, die nach dem 2-Takt-Prinzip betrieben werden, ausgestaltet sein. Alternativ kann die Expansion des dampfförmigen Arbeitsmediums in einem Schraubenexpander erfolgen. Unabhängig von der Art des Dampfmotors ist der Austritt eines Teils des Arbeitsmediums im Spaltbereich zwischen den bewegten Komponenten der Expansionsräume und den feststehenden Wandungsbereichen nicht gänzlich zu vermeiden. Im Falle einer Hubkolbenmaschine als Dampfmotor vollzieht sich diese Leckage im Bereich des konstruktiv notwendigen Spalts zwischen Kolben bzw. den Kolbenringen und der Zylinderlaufbahn, sodass eine gewisse Quantität an Arbeitsmedium in das Dampfmotorgehäuse einströmt. Dieser als Blow-by bezeichnete Vorgang liegt auch bei Verbrennungsmotoren vor, entsprechend werden Maßnahmen ergriffen, um den Spaltbereich entlang der Zylinderaufflächen möglichst abzudichten. Hierfür kommen Turbulenz erzeugende Ringnuten am Kolbenmantel und/oder an der Zylinderwandung in Frage.

Eine weitergehende Abdichtung des Zylinderraums zum Kurbelgehäuse einer Hubkolbenmaschine kann ferner mittels einer Trennbuchse erreicht werden, für die gesonderte Kolbenringe vorgesehen sind. Des Weiteren kann die Abdichtung durch eine Verringerung der Querkraftwirkung auf den Kolben verbessert werden. Eine zu diesem Zweck vorgeschlagene Lösung besteht darin, einen Kolbentrieb mit einem Kreuzkopf zu verwenden, wobei die Triebverbindung zwischen Kolben und Kurbelzapfen über eine Kolbenstange, die gelenkig mit einem Pleuel verbunden ist, erfolgt. Das Schwenklager zwischen Pleuel und Kolbenstange stützt sich typischerweise mittels eines Gleitschuhs an einer Gleitlagerwandung für den Kreuzkopf ab. Für eine Verringerung des Blow-bys eines Dampfmotors wird ein solcher Kreuzkopf durch die DD 3411 A vorgeschlagen, wobei im Hinblick auf eine möglichst kurze Bauweise der Kreuzkopf starr mit dem Kolbenboden verbunden ist, sodass auf eine separate Kolbenstange verzichtet werden kann. Durch eine Kreuzkopfführungsbuchse, die im Bereich des Übergangs zwischen Zylinder und Kurbelgehäuse angelegt ist, wird der zentrische Lauf des Kolbens verbessert, sodass mittels einer Labyrinthdichtung an der Kolbenwandung der Blow-by des Arbeitsmediums verringert werden kann.

Nachteilig an einer Kreuzkopfanordnung ist jedoch der zusätzliche konstruktive Aufwand in Verbindung mit einem höheren Gewicht der bewegten Teile, was insbesondere für schnell laufende Dampfmotoren unerwünscht ist. Des Weiteren kann auch mit den voranstehend beschriebenen Maßnahmen der Blow-by nicht gänzlich verhindert werden, sodass einer zunehmenden Verseifung des Schmiermittels im Sumpf des Kurbelgehäuses entgegengewirkt werden muss. Durch den Blow-by entsteht beim Betrieb des Dampfmotors im Kurbelgehäuse ein zunehmender Druck, sodass eine Kurbelgehäuseentlüftung vorzusehen ist. Diese von Verbrennungskraftmaschinen bekannte Entlüftung muss ein geschlossenes System darstellen, da ein Abzug aus dem Kurbelgehäuse unter Normalbetriebsbedingungen fein vernebeltes Schmiermittel mitträgt. Für Verbrennungskraftmaschinen wird daher der Abzug der Kurbelgehäuseentlüftung durch einen Ölfilter geleitet, bevor die aus dem Kurbelraum entnommenen Blow-by-Gase dem Ansaugtrakt der Verbrennungskraftmaschine zugeführt werden. Der Ölfilter führt das aufgefangene Schmiermittel mittels eines Ölrücklaufkanals wieder zurück in den Sumpf des Kurbelgehäuses. Derartige Ölfilter sind in unterschiedlichen Ausgestaltungen bekannt. Eine der Varianten besteht darin, einen Beruhigungsraum vorzusehen, in dem sich der Ölnebel absetzt. Alternativ kann das Ölabscheideelement nach dem Zentrifugalprinzip arbeiten und in Form eines Zyklons ausgebildet sein. Exemplarisch wird hierzu auf die DE 1 164 158 A verwiesen. Alternativ können Prallflächen in Kombination mit mehreren scharfen Umlenkungen für den Gasstrom verwendet werden. Hierzu wird exemplarisch die DE 10 2006 056 789 A1 genannt. Weitere Ausführungsformen sehen Wendel, Drahtgestricke oder Garne sowie Vliese als Ölabscheider vor. Ferner beschreibt die DE 102 03 274 A1 ein Kunststoffgranulat für eine Ölabscheidevorrichtung. Eine weitere Variante besteht darin, einen Elektrofilter, wie beispielsweise in der DE 197 01 463 C1 beschrieben, zur Ölabscheidung zu verwenden.

Ein weiteres Problem für Ölabscheider von Verbrennungskraftmaschinen stellt die Sicherstellung der Funktion bei tiefen Temperaturen dar. Bekannt ist aus der DE 10 2009 005 550 A1 eine elektrische Heizvorrichtung für einen Ölabscheider zum Reinigen von Kurbelgehäusegasen, die der Frostsicherung dient. Des Weiteren offenbart die DE 10 2004 031 499 B4 eine Heizeinrichtung am Eintritt der Kurbelgehäuse-Entlüftungsleitung in den Ansaugtrakt einer Verbrennungskraftmaschine, die ein Einfrieren in diesem Bereich verhindern soll. Der Erfindung liegt die Aufgabe zugrunde, einen Dampfmotor und ein Verfahren für dessen Betrieb anzugeben, das die Verseifung eines Schmiermediums im Gehäuse des Dampfmotors durch den Eintrag von Arbeitsmedium aufgrund des Blow-by-Effekts verringert. Das Verfahren und die Vorrichtung sollen sich durch konstruktive und fertigungstechnische Einfachheit auszeichnen.

Die voranstehend genannte Aufgabe wird durch die Merkmale der unabhängigen Ansprüche gelöst.

Für einen erfindungsgemäßen Dampfmotor wird einer Anreicherung des über den Blow-by-Effekt vom Expansionsraum aus in das Schmiermittel eingetragenen Arbeitsmediums innerhalb des Dampfmotorgehäuses dadurch verringert, dass der Schmiermittelsumpf im Inneren des Dampfmotorgehäuses auf eine Temperatur oberhalb der Verdampfungstemperatur des Arbeitsmediums gebracht wird. Dabei umfasst der erfindungsgemäße Dampfmotor eine Heizeinrichtung, um nach dem Anlagenstart die notwendige Temperatur im Schmiermittelsumpf möglichst rasch zu erreichen. Über eine Gehäuseentlüftung mit einem Ölabscheider wird zur Schaffung eines Druckausgleichs dampfförmiges Arbeitsmedium mit dem Ölnebel abgeführt und nach dessen Abscheidung aus dem Gasabzug bevorzugt dem Reservoir für das Arbeitsmedium der Dampfenergieanlage zugeleitet.

Die Heizeinrichtung für das Schmiermittel im Schmiermittelsumpf des Dampfmotorgehäuses ist im Falle eines Hubkolbendampfmotors bevorzugt im Kurbelgehäuse angeordnet. Hierfür kommt ein elektrischer Heizwiderstand in Frage. Alternativ oder zusätzlich können für die Heizeinrichtung Wärmequellen innerhalb der Dampfenergieanlage, etwa eine Dampfheizung oder eine Kondensatheizung, oder externe Wärmequellen, beispielsweise aus dem Abgasstrom einer Verbrennungskraftmaschine oder aus deren Ölkreislauf, verwendet werden. Denkbar ist ferner, für die Heizeinrichtung einen Wärmespeicher, etwa einen Latentwärmespeicher, vorzusehen.

Nach einer hinreichenden Betriebszeit des Dampfmotors wird die Heizeinrichtung für das Schmiermittel deaktiviert, sobald im Schmiermittelsumpf des Dampfmotorgehäuses eine Temperatur oberhalb der Verdampfungstemperatur des Arbeitsmediums durch den Dampfdurchsatz in den Expansionsräumen sicher aufrechterhalten werden kann. Hierzu ist der Dampfmotor bevorzugt mit einer thermischen Isolierung umkleidet. Eine obere Temperaturgrenze wird durch die Zersetzungstemperatur des Schmiermediums festgelegt, sodass im Dauerbetrieb ein Schmiermittelkühlkreislauf aktiviert wird, wobei die Schmiermitteltemperatur nicht unter die Verdampfungstemperatur des Arbeitsmediums fallen darf.

Gemäß einer Weitergestaltung ist zusätzlich der Ölabscheider so im Heißbereich des Dampfmotors angeordnet, dass er im Betrieb eine Temperatur oberhalb der Verdampfungstemperatur des Arbeitsmediums erreicht. Für eine bevorzugte, alternative Gestaltung umfasst der Ölabscheider eine separate Heizeinrichtung, die die Gas führenden Bereiche und insbesondere das eigentliche Schmiermittelabscheideelement auf eine Temperatur oberhalb der Verdampfungstemperatur des Arbeitsmediums aufheizt. Ferner wird für eine bevorzugte Ausgestaltung die Gas führende Leitungsverbindung zwischen dem Dampfmotorgehäuse und dem Ölabscheider thermisch isoliert oder separat beheizt, um möglichst rasch eine Betriebstemperatur oberhalb der Verdampfungstemperatur des Arbeitsmediums zu erreichen.

Für das erfindungsgemäße Verfahren wird der Schmiermittelsumpf im Dampfmotorgehäuse auf eine solche Temperatur gebracht beziehungsweise auf einer Temperatur gehalten, die eine Verdampfung des Arbeitsmediums des Dampfmotors sicherstellt. Dabei liegt insbesondere eine Temperatur vor, die bevorzugt um ein Temperaturintervall ΔT > 10° und besonders bevorzugt ΔT > 20° oberhalb der Verdampfungstemperatur des Arbeitsmediums liegt. In einer Dampfmotorgehäuse-Entlüftungsleitung erfolgt dann ein Abzug, der aus einer Mischung aus Ölnebel und verdampftem Arbeitsmedium besteht.

Ferner ist es vorteilhaft, die Ölabscheidung auszuführen bevor das Arbeitsmedium kondensiert. Hierzu sind für eine Weitergestaltung der Erfindung die Abzugskanäle bis zum Ölabscheider sowie der Ölabscheider selbst temperiert oder innerhalb der thermischen Hülle des Dampfmotors angeordnet, wobei die Temperatur ausreichend hoch ist, um das Arbeitsmedium im Dampfzustand zu halten. Im Ölabscheider werden die in Tröpfchenform vorliegenden Schmiermittelbestandteile des Abzugs aus dem Dampfmotorgehäuse weitestgehend entfernt, während das dampfförmige Arbeitsmedium im Wesentlichen ungehindert den Ölabscheider passiert. Nachfolgend zum Ölabscheider erfolgt die Zuleitung des verbleibenden Rests des Abzugs aus dem Dampfmotorgehäuse in den Kreislauf des Arbeitsmediums des Dampfmotors, wobei nach dem Ölabscheider eine Kondensation des Arbeitsmediums eintreten darf. Besonders bevorzugt erfolgt eine Einleitung am Kondensator für das Arbeitsmedium, wobei mittels einer geeigneten Pump- und Ventilvorrichtung sichergestellt wird, dass keine Rückzirkulation des Arbeitsmediums zum Ölabscheider stattfindet. Demnach wird der verbleibende Abzug aus dem Dampfmotorgehäuse über den Kondensator dem Reservoir für das Arbeitsmedium zugeleitet. Denkbar sind für eine Ausgestaltungsalternative auch die Umgehung des Kondensators und die direkte Zuleitung in das Arbeitsreservoir, wobei eine Kondensation des Arbeitsmediums in allen Bereichen des Leitungsnetzes nach dem Ölabscheider eintreten darf. Auch eine Kondensation unmittelbar im Reservoir des Arbeitsmediums ist aufgrund des relativ kleinen Volumenstroms an Arbeitsmedium aus der Gehäuseentlüftung möglich.

Für eine Weiterführung der Erfindung bildet der voranstehend beschriebene Dampfmotor mit einem Schmiermittelsumpf und einem Ölabscheider für die Gehäuseentlüftung auf einer Temperatur oberhalb der Verdampfungstemperatur des Arbeitsmediums einen Teil einer Dampfenergieanlage. Für eine bevorzugte Ausgestaltung wird im Reservoir für das Arbeitsmedium ein weiterer Ölabscheider vorgesehen, der einer Ansammlung von Schmiermittel, das nicht gänzlich durch den Ölabscheider der Gehäuseentlüftung entfernt wird, entgegenwirkt. Dieser reservoirseitige Ölabscheider steht mit dem Sumpf des Schmiermediums im Dampfmotorgehäuse in Verbindung, um das aus dem Reservoir abgeschöpfte Schmiermittel zum Dampfmotor zurückzuführen.

Nachfolgend wird die Erfindung anhand von Ausgestaltungsbeispielen und in Verbindung mit Figurendarstellungen genauer erläutert. In diesen ist im Einzelnen Folgendes dargestellt:
- Figur 1: zeigt eine Ausgestaltung der Erfindung mit einem Hubkolbendampfmotor und einem elektrischen Heizwiderstand als Heizeinrichtung zur Erwärmung des Schmiermittelsumpfs im Kurbelgehäuse als Prinzipskizze.
- Figur 2: zeigt eine Ausgestaltungalternative der Erfindung mit einer Kondensatheizung als Heizeinrichtung zur Erwärmung des Schmiermittelsumpfs.
- Figur 3: zeigt ein Ausführungsbeispiel mit einer Dampfheizung als Heizeinrichtung zur Erwärmung des Schmiermittelsumpfs.
- Figur 4: zeigt eine Weitergestaltung der Erfindung mit einem in die Thermohülle des Dampfmotors integrierten Ölabscheider.
- Figur 5: zeigt eine alternative Ausgestaltung der Erfindung mit einer separaten Ölabscheiderheizung.
- Figur 6: zeigt einen dem Stand der Technik entsprechenden Hybridantrieb für ein Fahrzeug umfassend eine Verbrennungskraftmaschine und eine Dampfenergieeinrichtung.

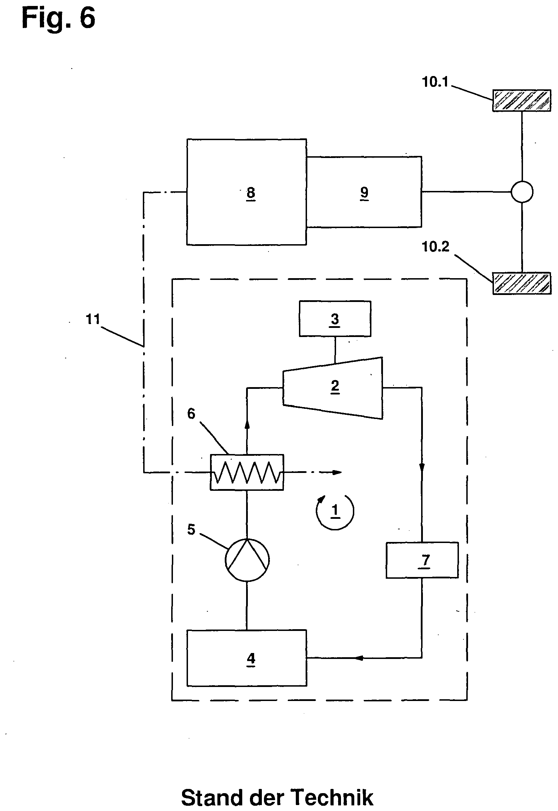

In Figur 6 ist schematisch vereinfacht eine dem Stand der Technik entsprechende Antriebsvorrichtung für ein Fahrzeug mit einem Hybridmotor dargestellt, der eine Verbrennungskraftmaschine 8 sowie eine Dampfenergieanlage 1 umfasst. Die von der Verbrennungskraftmaschine 8 erzeugte Motorleistung wird über ein Getriebe 8 auf die Antriebsräder 10.1 und 10.2 übertragen. Dabei werden die beim Betrieb der Verbrennungskraftmaschine 8 entstehenden Abgase über die Abgasführung 11 dem Verdampfer 6 der Dampfenergieanlage 1 zugeleitet. Diesem strömt über die Speisepumpe 5 ein verdampfbares Arbeitsmedium zu, das in einem Reservoir 4 für das Arbeitsmedium bevorratet wird. Das dampfförmige Arbeitsmedium wird zum Dampfmotor 2 geleitet und unter Verrichtung mechanischer Arbeit entspannt. Für die dargestellte Ausgestaltung dient die vom Dampfmotor 2 abgegebene mechanische Leistung dem Antrieb eines elektrischen Generators 3, der im Einzelnen nicht dargestellte Sekundärverbraucher des Fahrzeugs speist. Für eine nicht in den Figuren gezeigte, alternative Gestaltung kann die vom Dampfmotor 2 erzeugte Leistung zur Unterstützung des Vortriebs des Fahrzeugs verwendet werden und beispielsweise im Bereich des Getriebes 9 in den Antriebsstrang eingekoppelt werden. Als weitere Komponente der Dampfenergieanlage 1 ist in Figur 6 ein Kondensator 7 dargestellt, der den Abdampf des Dampfmotors 2 aufnimmt und kondensiert. Das Kondensat des Arbeitsmediums fließt dann zurück zum Reservoir 4.

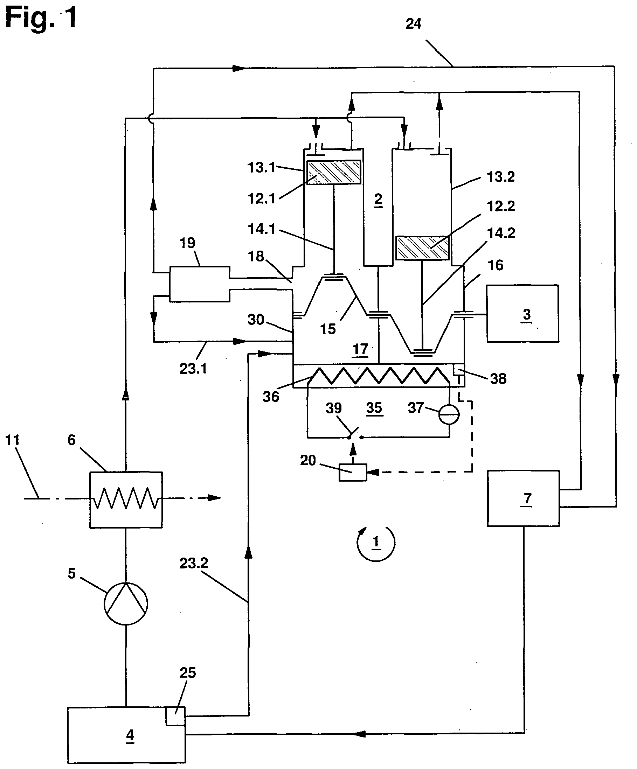

Figur 1 zeigt eine erfindungsgemäß gestaltete Dampfenergieanlage 1 mit einem Dampfmotor 2, der ein Dampfmotorgehäuse 30 umfasst. Einzelheiten, wie eine das Dampfmotorgehäuse 30 umschließende thermische Isolierung, sind zur Verbesserung der Übersichtlichkeit nicht dargestellt. In der skizzierten Ausgestaltung wird als Dampfmotor 2 eine Kolbenmaschine mit den beiden Hubkolben 12.1, 12.2 verwendet. Diese treiben über die Pleuel 14.1, 14.2 eine Kurbelwelle 15 an, die in einem Kurbelgehäuse 16 mit einem Schmiermittelsumpf 17 gelagert ist. Zwischen den Mantelflächen der Hubkolben 12.1, 12.2 und den Zylinderwandungen 13.1, 13.2 liegt beim Betrieb des Dampfmotors 2 ein Leckagestrom des Arbeitsmediums (Blow-by) vor, der in das Innere des Kurbelgehäuses 16 führt. Zur Verhinderung der Verseifung des Schmiermittels im Schmiermittelsumpf 17 des Kurbelgehäuses 16 und um einer Druckerhöhung aufgrund des Blow-bys entgegenzuwirken, wird eine Gehäuseentlüftung in Form einer Kurbelgehäuseentlüftung 18 vorgesehen. Diese umfasst einen Ölabscheider 19, der vorliegend mit einem Beruhigungsraum ausgestattet ist. Weitere Ausgestaltungen sind denkbar, dabei kommen insbesondere Zyklonabscheider, Filterelemente in Form von Gestricken oder Granulaten und elektrisch betriebene Ölabscheider 19 in Frage.

Zur Beheizung des Schmiermittels im Schmiermittelsumpf 17 ist im Bereich des Kurbelgehäuses 16 eine Heizeinrichtung 35 vorgesehen. Diese umfasst vorliegend einen elektrischen Heizwiderstand 36, der an eine Stromquelle 37 angeschlossen ist. Ferner ist ein mit dem Schmiermittelsumpf 17 in einem direkten thermischen Kontakt stehender Temperatursensor 38 vorgesehen, der mit einer Schaltanordnung 39 und einer Steuerung 20 zur Sensorsignalverarbeitung und Einstellung des Stromflusses durch den elektrischen Heizwiderstand 36 zur Heizungssteuerung zusammenwirkt. Beim Start der Dampfenergieanlage 1 oder nach einer längeren Betriebspause wird das Schmiermittel im Schmiermittelsumpf 17 durch den elektrischen Heizwiderstand 36 auf einer Temperatur oberhalb der Verdampfungstemperatur des Arbeitsmediums gebracht, sodass ein Austrag über die Kurbelgehäuseentlüftung möglich ist, bevor eine Verseifung des Schmiermittels eintritt.

Für eine bevorzugte Ausgestaltung wird das im Ölabscheider 19 vom Gasabzug aus dem Kurbelgehäuse 16 abgetrennte Schmiermittel über die Schmiermittelrückführung 23.1 dem Schmiermittelsumpf 17 im Kurbelgehäuse 16 zugeführt. Der weitgehend vom Schmiermittel getrennte restliche Abzug der Kurbelgehäuseentlüftung, nachfolgend als Schmiermittel freier Abzug 24 bezeichnet, wird für die vorliegend dargestellte Ausgestaltung über den Kondensator 7 dem Reservoir für das Arbeitsmedium 4 zugeführt. Alternativ ist für den Schmiermittel freien Abzug 24 ein separates Sammelreservoir denkbar, eine solche Ausgestaltung ist in Figur 1 im Einzelnen nicht dargestellt.

Für das skizzierte Ausführungsbeispiel wird im Reservoir für das Arbeitsmedium 4 ein reservoirseitiger Ölabscheider 25 verwendet. Dieser kann beispielsweise als Membranabscheider ausgestaltet sein. Er dient der Trennung des Arbeitsmediums vom eingetragenen Schmiermittel, das über die Schmiermittelrückführung 23.2 in den Schmiermittelsumpf 17 des Kurbelgehäuses 16 zurückfließt.

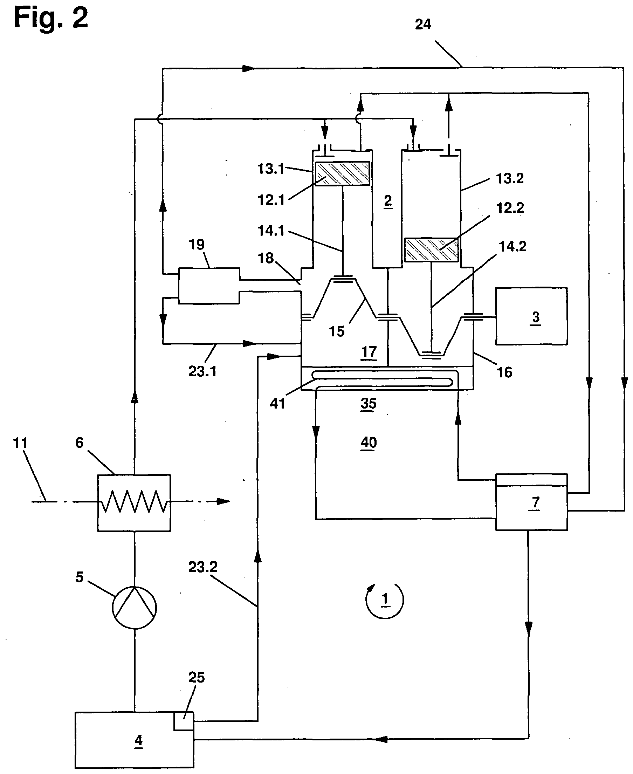

Figur 2 zeigt eine Ausgestaltungsalternative der Erfindung mit einer Heizeinrichtung 35 für das Schmiermittel im Schmiermittelsumpf 17 des Kurbelgehäuses 16 in Form einer Kondensatheizung 40. Hierzu wird das im Kondensator 7 eintreffende, noch dampfförmige Arbeitsmedium über einen im Einzelnen nicht dargestellten Bypass einem innerhalb des Kurbelgehäuses 16 angelegten, mäandrierenden Leitungssystem 41 zugeleitet, das ausgangsseitig mit dem Reservoir 4 für das Arbeitsmedium verbunden ist. Innerhalb des mäandrierenden Leitungssystems 41 findet die Kondensation des Arbeitsmediums statt. Fließt im Wesentlichen nur noch dampfförmiges Arbeitsmedium zum Kondensator 7 zurück hat der Schmiermittelsumpf 17 eine Betriebstemperatur oberhalb der Verdampfungstemperatur des Arbeitsmediums erreicht und die Bypassverbindung innerhalb des Kondensators wird geschlossen und damit die Heizeinrichtung 35 abgeschaltet.

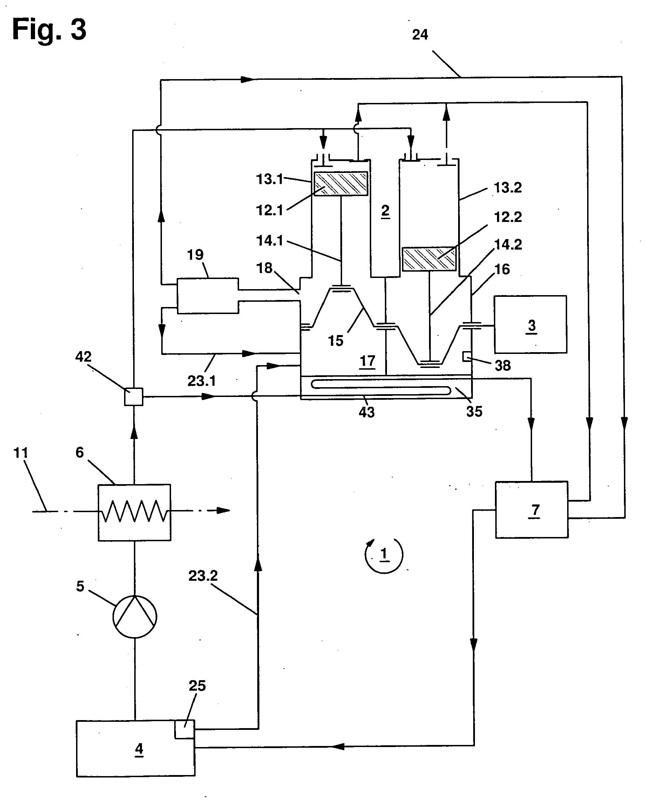

Ein weiteres Ausführungsbeispiel mit einer Dampfheizung 43 als Heizeinrichtung 35 ist in Figur 3 gezeigt. Dabei ist in der Dampfleitung nach dem Verdampfer 6 ein 2-Wege-Dampfventil 42 angeordnet, das mit einer im Einzelnen nicht dargestellten, die Signale des Temperatursensors 38 im Kurbelgehäuse 16 verarbeitenden Steuerung zusammenwirkt. Für einen Betriebszustand mit einer Temperatur im Schmiermittelsumpf 17 unterhalb der Verdampfungstemperatur des Arbeitsmediums wird dampfförmiges Arbeitsmedium vom 2-Wege-Dampfventil 42 aus durch das mäandrierende Leitungssystem 41 der Heizeinrichtung 35 direkt zum Kondensator 7 geleitet, sodass ein Aufheizen des Schmiermittelsumpfs 17 bewirkt wird.

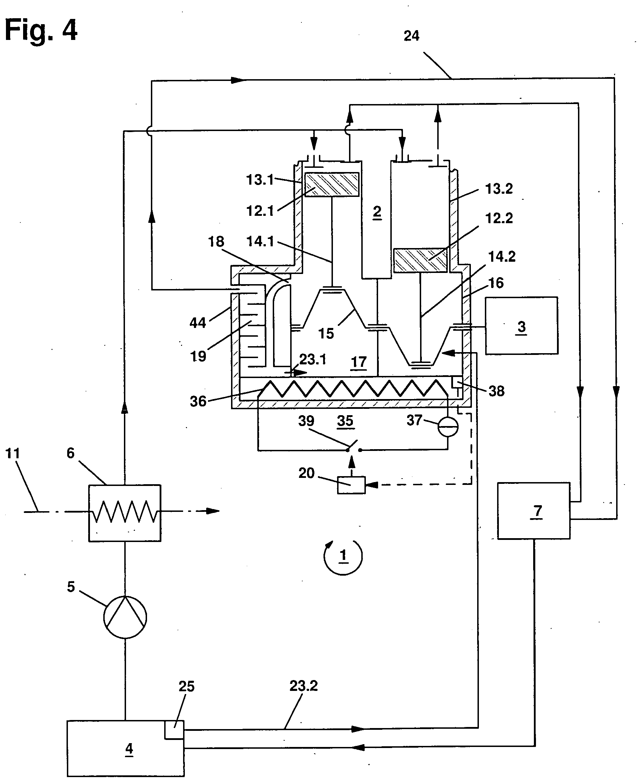

Figur 4 zeigt eine Weitergestaltung ausgehend von der in Figur 1 gezeigten Ausführung. Diese besteht darin, den Ölabscheider 19 innerhalb der thermischen Isolierung 44 des Dampfmotors 2 anzuordnen, sodass dieser im Heißbereich liegt. Zur Verdeutlichung ist ein Teil der thermischen Isolierung 44 des Dampfmotors 2 dargestellt, die die Hubkolben 12.1, 12.2 und das Kurbelgehäuse 16 umgibt. Bevorzugt liegt der Ölabscheider 19 innerhalb des Kurbelgehäuses 16, sodass dieser im Wesentlichen die Temperatur des Schmiermittelsumpfs 17 annimmt und damit beim Betrieb sichergestellt ist, dass das Arbeitsmedium in dessen Innerem dampfförmig verbleibt.

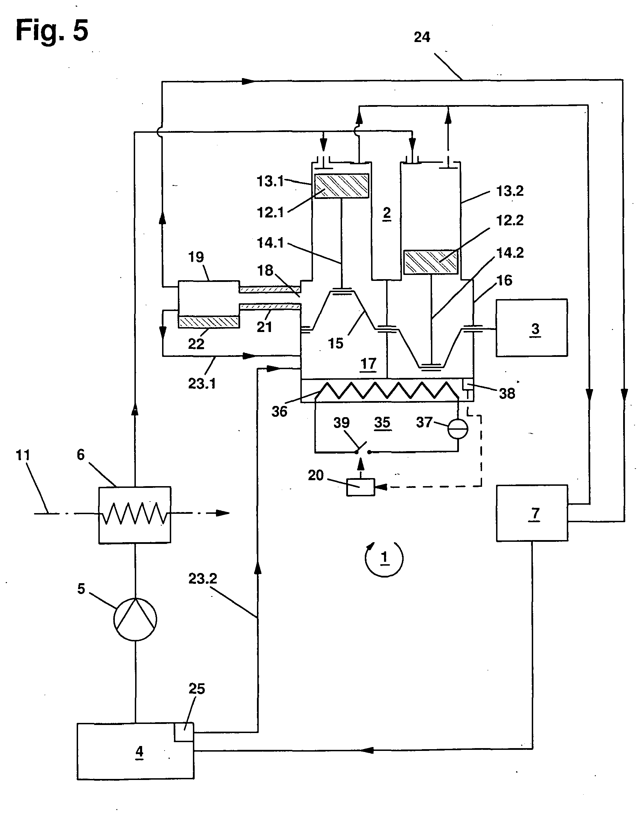

Für die in Figur 5 gezeigte, alternative Ausgestaltung ist eine separate Ölabscheiderheizung 22 am Ölabscheider 19 selbst vorgesehen. Ferner weist die Verbindung zwischen dem Auslass für die Kurbelgehäuseentlüftung 18 am Kurbelgehäuse 16 und dem Ölabscheider 19 eine separate Strömungskanalheizung 21 auf.

Weitere Ausgestaltungen der Erfindung sind denkbar, für die der Dampfmotor anstatt als Hubkolbenmaschine als Rotationskolbenmaschine ausgestaltet ist. Eingeschlossen sind ferner alternative Ausgestaltungen des Dampfmotors 2, wie Schraubenexpander. Für solche Bauformen liegt keine Kurbelwelle 15 in einem Kurbelgehäuse 16 vor. Demnach wird im Rahmen der Erfindung das Blow-by aus den Expansionsräumen in das Innere des Dampfmotorgehäuses mit einer Gehäuseentlüftung abgeführt, die einen Ölabscheider sowie eine Vorrichtung zur Sicherstellung der Verdampfung des Arbeitsmediums innerhalb des Dampfmotorgehäuses umfasst. Ferner wird bevorzugt eine Temperatur oberhalb der Verdampfungstemperatur des Arbeitsmediums in der Gehäuseentlüftung bis einschließlich des Ölabscheiders aufrechterhalten.

### Bezugszeichenliste

- 1: Dampfenergieanlage
- 2: Dampfmotor
- 3: elektrischer Generator
- 4: Reservoir für das Arbeitsmedium
- 5: Speisepumpe
- 6: Verdampfer
- 7: Kondensator
- 8: Verbrennungskraftmaschine
- 9: Getriebe
- 10.1, 10.2: Antriebsrad
- 11: Abgasführung
- 12.1, 12.2: Hubkolben
- 13.1, 13.2: Zylinderwandung
- 14.1, 14.2: Pleuel
- 15: Kurbelwelle
- 16: Kurbelgehäuse
- 17: Schmiermittelsumpf
- 18: Kurbelgehäuseentlüftung
- 19: Ölabscheider
- 20: Steuerung
- 21: Strömungskanalheizung
- 22: Ölabscheiderheizung
- 23.1, 23.2: Schmiermittelrückführung
- 24: Schmiermittel freier Abzug
- 25: reservoirseitiger Ölabscheider
- 30: Dampfmotorgehäuse
- 35: Heizeinrichtung
- 36: elektrischer Heizwiderstand
- 37: Stromquelle
- 38: Temperatursensor
- 39: Schaltanordnung
- 40: Kondensatheizung
- 41: mäandriendes Leitungssystem
- 42: 2-Wege-Dampfventil
- 43: Dampfheizung
- 44: thermische Isolierung

## Patentansprüche

1. Verfahren zum Betrieb einer Dampfenergieanlage (1), umfassend einen Dampfmotor (2), der mit einem dampfförmigen Arbeitsmedium betrieben wird, einen Verdampfer (6) zum Verdampfen des Arbeitsmediums; einen Kondensator (7) zur Verflüssigung des Arbeitsmediums und ein Reservoir (4) für das Arbeitsmedium,
**dadurch gekennzeichnet, dass** ein Schmiermittelsumpf (17) in einem Gehäuse des Dampfmotors (2) während der Startphase des Dampfmotors (2) mittels einer Heizeinrichtung (35) auf eine Temperatur oberhalb der Verdampfungstemperatur des Arbeitsmediums aufgeheizt wird.

2. Verfahren nach Anspruch 1, **dadurch gekennzeichnet, dass** ein Gasabzug zur Gehäuseentlüftung des Dampfmotors (2) einem Ölabscheider (19) zugeleitet wird, der beim Betrieb des Dampfmotors (2) durch die Anordnung innerhalb der thermischen Isolierung (44) des Dampfmotors (2) und/oder durch eine separate Ölabscheiderheizung (22) auf eine Temperatur oberhalb der Verdampfungstemperatur des Arbeitsmediums gebracht wird.

3. Dampfmotor, umfassend ein Dampfmotorgehäuse (30) mit einem im Innern des Dampfmotorgehäuses (30) eingeschlossenen Schmiermittelsumpf (17); einen Expansionsraum für ein den Dampfmotor (2) antreibendes, dampfförmiges Arbeitsmedium, der innerhalb des Dampfmotorgehäuses (30) liegt; wobei am Dampfmotorgehäuse (30) eine Gehäuseentlüftung mit einem Ölabscheider (19) vorgesehen ist und der Dampfmotor **dadurch gekennzeichnet ist, dass** dem Schmiermittelsumpf (17) eine Heizeinrichtung (35) zugeordnet ist, die den Schmiermittelsumpf (17) auf eine Temperatur oberhalb der Verdampfungstemperatur des Arbeitsmediums bringt.

4. Dampfmotor nach Anspruch 3, **dadurch gekennzeichnet, dass** die Heizeinrichtung (35) einen elektrischen Heizwiderstand (36) oder eine das Arbeitsmedium verwendende Kondensatheizung (40) oder Dampfheizung (43) umfasst.

5. Dampfmotor nach einem der Ansprüche 3 oder 4, **dadurch gekennzeichnet, dass** der Ölabscheider (19) innerhalb einer thermischen Isolierung (44) für den Dampfmotor (2) angeordnet ist.

6. Dampfmotor nach einem der Ansprüche 3 - 5, **dadurch gekennzeichnet, dass** dem Ölabscheider (19) eine separate Ölabscheiderheizung (22) zugeordnet ist.

7. Dampfmotor nach einem der Ansprüche 3 - 6, **dadurch gekennzeichnet, dass** die Gehäuseentlüftung für eine Verbindungsleitung zwischen dem Dampfmotorgehäuse (30) und dem Ölabscheider (19) eine Strömungskanalheizung (21) umfasst, die eine Temperatur in der Verbindungsleitung oberhalb der Verdampfungstemperatur des Arbeitsmediums aufrechterhält.

8. Dampfmotor nach einem der Ansprüche 3 - 7, **dadurch gekennzeichnet, dass** der Dampfmotor (2) einen Hubkolben (12.1, 12.2), der über einen Pleuel (14.1, 14.2) eine Kurbelwelle (15) antreibt, und einen Schmiermittelsumpf (17) in einem die Kurbelwelle (15) aufnehmenden Kurbelgehäuse (16) umfasst, das Teil des Dampfmotorgehäuses (30) ist, und die Gehäuseentlüftung in Form einer Kurbelgehäuseentlüftung (18) ausgebildet ist.

9. Dampfenergieanlage, umfassend einen Dampfmotor (2) nach einem der Ansprüche 3 - 8; umfassend einen Verdampfer (6) für das Arbeitsmedium; einen Kondensator (7) und ein Reservoir (4) für das Arbeitsmedium, wobei der Ölabscheider (19) in der Gehäuseentlüftung des Dampfmotors (2) wenigstens mittelbar mit dem Reservoir für das Arbeitsmedium (4) verbunden ist.

10. Dampfenergieanlage nach Anspruch 9, **dadurch gekennzeichnet, dass** zwischen dem Ölabscheider (19) und dem Reservoir für das Arbeitsmedium (4) der Verdampfer (6) zwischengeschaltet ist.

11. Dampfenergieanlage nach einem der Ansprüche 9 oder 10, **dadurch gekennzeichnet, dass** dem Reservoir für das Arbeitsmedium (4) ein reservoirseitiger Ölabscheider (25) zugeordnet ist, der über eine Schmiermittelrückführung (23.2) mit dem Schmiermittelsumpf (17) im Dampfmotorgehäuse (30) verbunden ist.

## Claims

1. Method for operating a steam power plant (1), comprising a steam engine (2) which is operated with a vaporous working medium, an evaporator (6) for evaporating the working medium, a condenser (7) for liquefying the working medium, and a reservoir (4) for the working medium, **characterized in that** a lubricant sump (17) in a housing of the steam engine (2) is heated to a temperature above the evaporating temperature of the working medium by means of a heating device (35) during the starting phase of the steam engine (2).

2. Method according to claim 1, **characterized in that** a gas take-off for ventilating the housing of the steam engine (2) is fed to an oil separator (19) which, during operation of the steam engine (2), is brought to a temperature above the evaporating temperature of the working medium by being arranged inside the thermal insulation (44) of the steam engine (2) and/or by a separate oil separator heating means (22).

3. Steam engine, comprising:
a steam engine housing (30) with a lubricant sump (17) enclosed in the interior of the steam engine housing (30);
an expansion chamber for a vaporous working medium which drives the steam engine (2), said expansion chamber being located inside the steam engine housing (30);
wherein a housing ventilation means comprising an oil separator (19) is provided on the steam engine housing (30), and the steam engine is **characterized in that** the lubricant sump (17) is assigned a heating device (35) which brings the lubricant sump (17) to a temperature above the evaporating temperature of the working medium.

4. Steam engine according to claim 3, **characterized in that** the heating device (35) comprises an electrical heating resistor (36) or a condensate heating means (40) or steam heating means (43) which uses the working medium.

5. Steam engine according to one of claims 3 or 4, **characterized in that** the oil separator (19) is arranged inside a thermal insulation (44) for the steam engine (2).

6. Steam engine according to one of claims 3 to 5, **characterized in that** the oil separator (19) is assigned a separate oil separator heating means (22).

7. Steam engine according to one of claims 3 to 6, **characterized in that** the housing ventilation means comprises a flow channel heating means (21) for a connecting line between the steam engine housing (30) and the oil separator (19), which flow channel heating means maintains a temperature in the connecting line that is above the evaporating temperature of the working medium.

8. Steam engine according to one of claims 3 to 7, **characterized in that** the steam engine (2) comprises a reciprocating piston (12.1, 12.2) which drives a crankshaft (15) via a piston rod (14.1, 14.2), and a lubricant sump (17) in a crankcase (16) which accommodates the crankshaft (15) and which is part of the steam engine housing (30), and the housing ventilation means is configured in the form of a crankcase ventilation means (18).

9. Steam power plant, comprising a steam engine (2) according to one of claims 3 to 8; comprising an evaporator (6) for the working medium; a condenser (7) and a reservoir (4) for the working medium, wherein the oil separator (19) in the housing ventilation means of the steam engine (2) is connected at least indirectly to the reservoir for the working medium (4).

10. Steam power plant according to claim 9, **characterized in that** the evaporator (6) is interposed between the oil separator (19) and the reservoir for the working medium (4).

11. Steam power plant according to one of claims 9 or 10, **characterized in that** the reservoir for the working medium (4) is assigned an oil separator (25) on the reservoir, which oil separator is connected to the lubricant sump (17) in the steam engine housing (30) via a lubricant return (23.2).

## Revendications

1. Procédé pour la conduite d'une installation de génération d'énergie à vapeur (1) comprenant un moteur à vapeur (2) qui fonctionne avec un fluide de travail sous forme de vapeur, un évaporateur (6) pour faire évaporer le fluide de travail, un condenseur (7) pour liquéfier le fluide de travail et un réservoir (4) pour le fluide de travail, **caractérisé en ce qu'**un bac à lubrifiant (17) dans un carter du moteur à vapeur (2) est chauffé pendant la phase de démarrage du moteur à vapeur (2) au moyen d'une installation de chauffage (35) jusqu'à une température supérieure à la température d'évaporation du fluide de travail.

2. Procédé selon la revendication 1, **caractérisé en ce qu'**un prélèvement de gaz pour le dégazage du carter du moteur à vapeur (2) est amené à un séparateur d'huile (19) qui est amené à une température supérieure à la température d'évaporation du fluide de travail lors du fonctionnement du moteur à vapeur (2), de par sa disposition à l'intérieur de l'isolation thermique (44) du moteur à vapeur (2) et/ou par un chauffage du séparateur d'huile (22) séparé.

3. Moteur à vapeur comprenant
un carter de moteur à vapeur (30) avec un bac à lubrifiant (17) enfermé à l'intérieur du carter de moteur à vapeur (30) ;
un espace d'expansion pour un fluide de travail sous forme de vapeur entraînant le moteur à vapeur (2), qui se trouve à l'intérieur du carter de moteur à vapeur (30) ;
dans lequel est prévu sur le carter de moteur à vapeur (30) un dégazage du carter avec un séparateur d'huile (19),
**caractérisé en ce que** le bac à lubrifiant (17) est associé à une installation de chauffage (35) qui amène le bac à lubrifiant (17) à une température supérieure à la température d'évaporation du fluide de travail.

4. Moteur à vapeur selon la revendication 3, **caractérisé en ce que** l'installation de chauffage (35) comprend une résistance chauffante électrique (36) ou un chauffage à condensation (40) ou un chauffage à vapeur (43) utilisant le fluide de travail.

5. Moteur à vapeur selon l'une des revendications 3 ou 4, **caractérisé en ce que** le séparateur d'huile (19) est disposé à l'intérieur d'une isolation thermique (44) du moteur à vapeur (2).

6. Moteur à vapeur selon l'une des revendications 3 à 5, **caractérisé en ce que** le séparateur d'huile (19) est associé à un chauffage du séparateur d'huile (22) séparé.

7. Moteur à vapeur selon l'une des revendications 3 à 6, **caractérisé en ce que** le dégazage du carter comprend, pour une conduite de communication entre le carter de moteur à vapeur (30) et le séparateur d'huile (19), un chauffage de conduit d'écoulement (21) qui maintient la température dans la conduite de communication au-dessus de la température d'évaporation du fluide de travail.

8. Moteur à vapeur selon l'une des revendications 3 à 7, **caractérisé en ce que** le moteur à vapeur (2) comprend un piston de levée (12.1, 12.2) qui entraîne un vilebrequin (15) par l'intermédiaire d'une bielle (14.1, 14.2) et un bac à lubrifiant (17) dans un carter de vilebrequin (16) dans lequel le vilebrequin (15) est logé et qui fait partie du carter de moteur à vapeur (30), et le dégazage du carter est réalisé sous la forme d'un dégazage du carter de vilebrequin (18).

9. Installation de production d'énergie à vapeur comprenant un moteur à vapeur (2) selon l'une des revendications 3 à 8, comprenant un évaporateur (6) pour le fluide de travail, un condenseur (7) et un réservoir (4) pour le fluide de travail, dans laquelle le séparateur d'huile (19) dans le dégazage du carter du moteur à vapeur (2) est au moins indirectement relié au réservoir (4) pour le fluide de travail.

10. Installation de production d'énergie à vapeur selon la revendication 9, **caractérisée en ce que** l'évaporateur (6) est intercalé entre le séparateur d'huile (19) et le réservoir (4) pour le fluide de travail.

11. Installation de production d'énergie à vapeur selon l'une des revendications 9 ou 10, **caractérisée en ce que** le réservoir pour le fluide de travail (4) est associé à un séparateur d'huile (25) du côté du réservoir, qui communique par un retour de lubrifiant (23.2) avec le bac à lubrifiant (17) dans le carter de moteur à vapeur (30).
